# EUROPEAN PATENT SPECIFICATION

(11) **EP 0 547 590 B1**
(45) Date of publication and mention of the grant of the patent: **08.09.1999**
(21) Application number: 92121440.9
(22) Date of filing: 17.12.1992
(51) Int. Cl.: B61F 5/30, F16F 1/36, B60G 11/22

(54) **A spring member for use in making vehicle suspensions**
Federelement zur Herstellung von Fahrzeugaufhängungen
Elément à ressort pour la fabrication de suspensions de véhicule

(30) Priority: 18.12.1991 IT MI913384
(43) Date of publication of application: 23.06.1993
(73) Proprietor: C.F. GOMMA S.p.A., 25050 Passirano (Brescia) (IT)
(72) Inventor: Morini, Emilio, I- Milan (IT)
(74) Representative: Righetti, Giuseppe

(56) References cited:
- DE-B- 1 279 058
- GB-A- 783 221
- GB-A- 1 459 671
- US-A- 3 147 964
- PATENT ABSTRACTS OF JAPAN vol. 13, no. 281 (M-842)(3629) 27 June 1989

## Description

The present invention relates to a spring member for use in making vehicle suspensions, of the type comprising the features recited in the preamble of claim 1.

In the described embodiment the spring member is particularly studied for primary suspensions of railway trucks and the like to which reference will be made in the following. However, the innovative concepts of the invention may apply as well to the accomplishment of spring members adapted for other purposes, such as spring mountings in motor-vehicle engines for example, or others.

It is known that primary suspensions in railway cars designed to elastically connect the structure of each truck to the wheel-suspension units, the so-called axles, are in many cases formed with spring members in which the elastic load-bearing function rely on a rubber ring. In more detail, this elastic ring is engaged, through a rubber-metal bonding process carried out while the ring is being vulcanised, between cone-shaped surfaces respectively carried by a core disposed within the elastic ring and designed to be suitably engaged to the respective axle and a cylindrical encircling collar surrounding the elastic ring according to a circular extension and designed to be engaged in a corresponding housing formed in a bracket of attachment to the truck chassis frame.

Usually, when at rest, the elastic ring is submitted to precompressive radial forces omogeneously distributed throughout its section, which forces result from a straining operation carried out on the encircling collar previously joined to the ring. In greater detail, during this straining operation the spring member is forced to pass through a die having a circular opening of suitably reduced diameter in relation to the outer diameter of the encircling collar. Under this situation, a diameter reduction is imposed to the encircling collar, which brings about the radial preloading of the elastic ring.

By virtue of the radial precompression of the elastomeric material, the formation of inner tensile stresses is eliminated, as well as the resulting risk of separation of thering from the cone-shaped surfaces of the core and collar. Said inner stresses could in fact arise due to a natural shrinkage of the elastomeric material after vulcanisation for example, and also as a result of transverse stresses transmitted to the spring member in use.

Under operating conditions, the vertical loads due to the structure weight lying on the spring member tend to produce an axial movement of the collar with respect to the core, thereby causing a reduction of the space defined beween the cone-shaped surfaces, within which the elastic ring is confined. Under this situation, the elastic ring will be homogeneously compressed and will therefore resist said vertical loads.

In addition, the elastic ring can counteract radial stresses tending to cause the radial shifting of the core at the inside of the encircling collar. In principle, these radial stresses may occur in one direction perpendicular to the ride direction, due for example to centrifugal forces on a bend, or in a second direction parallel to the ride direction, by effect for example of inertia forces generated on braking.

In many cases the elastic ring could be required to offer different stiffness features in the above specified two ways. In greater detail, a stiffer behaviour could be preferred in the direction parallel to the ride direction in order to resist inertias on braking in a more efficient manner. On the contrary, a lower stiffness could be required in a direction transverse to the ride one, in order to prevent a too great reaction transmitted from the spring member to the axle from causing the wheel derailment from the rails of a track.

For the purpose, it is currently provided that openings located such as to reduce the elastic resistance in the transverse direction to the vehicle running should be formed in the elastic ring. The elastomeric material removal so as to give rise to differentiated stiffnesses in preferential directions is a widely-spread technique in many application fields, and among others in the motor-vehicle field as disclosed in German Patent DE 4002357 for example, herein cited as a possible example of the state of the art.

The document DE-AS-1279058 refers to a spring member formed by an encircling collar, a core and an elastomeric ring interposed therebetween, and envisages the problem of improving the geometrical and dimensional precision of the surfaces of the collar and core which come in contact with the ring. In order to improve such a dimensional and geometrical precision, the above identified surfaces are formed by inserts of plastic material moulded on the collar and core respectively.

The document GB 1459671 refers to a resilient mounting formed by a pair of elastomeric elements coaxially disposed on opposite sides of an opening provided on a plate-like support structure. Precompressive axial forces are obtained in the elastomeric elements by action of a tie bolt passing through the resilient element and engaged to a pair of washers acting each on the respective resilient element. Such a document teach to obtain different stiffness values on different directions lying in a plane perpendicular to the axis of the support element, by conferring a cross-sectional elongated shape to the elastomeric elements and/or to the opening through which they are engaged.

Radial movements of the elastomeric elements with respect to the plate-like structure, are eliminated by increasing the friction between such elements.

The Patent abstract of Japan n. 1-74163(A) shows a spring member formed by a core, an encircling collar of conical shape and two coaxial elastomeric rubber elements separated by a partitioning annular plate interposed therebetween, each of these elements having a frusto-conical lateral shape.

In order to reduce the lateral dimensions of the vehicle on which the spring member is mounted, the spring member is provided with an elliptical cross-sectional shape, elongated in the running direction of the vehicle.

In accordance with the present invention it has been found that in order to give the spring member a different stiffness in the two ways, without impairing the structural integrity of the elastic ring, a substantially elongated configuration according to a direction transverse to the vehicle running should be conveniently conferred to the encircling collar and therefore the elastic ring itself, by adopting suitable expedients in order to avoid the occurrence of undesirable deformations of the collar as a result of the straining step.

In particular, the invention relates to a process for making a spring member suitable for vehicle suspensions, characterized by the features recited in the characterizing portion of claim 1.

Preferably, the ratio between the dimensional extensions of the encircling collar along the first and second directions respectively is included between 1.5 and 3 and the ratio between the stiffness coefficients detectable along the second direction and first direction respectively is included between 1.2 and 2.

Still in accordance with a preferential embodiment, the curvilinear portions belonging to said first and second pairs respectively are defined by respective arcs of circles, the ratio between the radius of the arcs of circles forming the second pair of curvilinear portions and the radius of the arcs of circles forming the first pair of curvilinear portions being included between 5 and 8.

In a possible alternative embodiment, the encircling collar may have an elliptic perimetric extension.

In the particular embodiment herein described, the core too has an elongated configuration along said first direction and the encircling collar is received in an engagement housing the shape of which matches the shape of said collar, said housing being formed in a bracket connecting it to said first structure.

Moreover, said first and second structures are respectively embodied by a chassis frame and an axle of a railway truck, said first and second directions being perpendicular and parallel respectively to the running direction of said truck.

Further features and advantages will become more apparent from the detailed description of a preferred embodiment of a spring member for use in making vehicle suspensions, in accordance with the present invention, given hereinafter by way of non-limiting example with reference to the accompanying drawings, in which:
- Fig. 1 is a diagrammatic side view of a railway truck the primary suspensions of which are embodied by spring members in accordance with the present invention;
- Fig. 2 is a top view of the spring member of the invention;
- Fig. 3 is a section taken along line III-III in Fig. 2;
- Fig. 4 is a section of the spring member taken along line IV-IV in Fig. 2;
- Fig. 5 is a graphic illustration showing the geometric features of the perimetric extension of the encircling collar according to a possible embodiment thereof;
- Fig. 5a is a graphic representation showing by way of example a possible modality of geometric construction in order to obtain the perimetrical extension of the encircling collar.

Referring to the drawings, a spring member for use in making suspensions in accordance with the present invention has been generally identified by reference numeral 1.

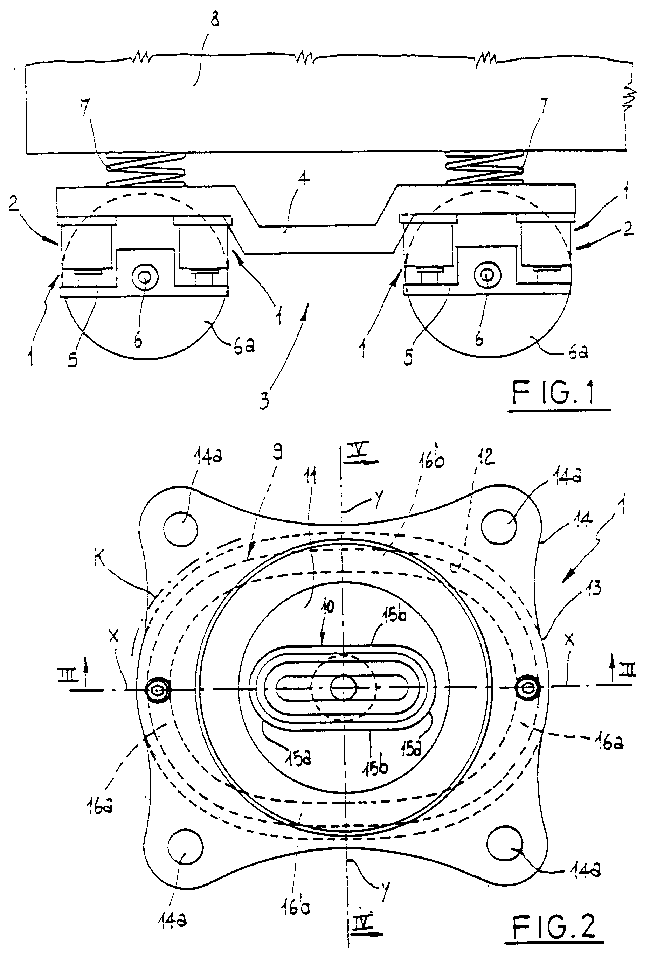

As clearly shown diagrammatically in Fig. 1, in the embodiment described the spring member 1 lends itself to be used in making the primary suspensions 2 of a railway truck 3. In known manner, each of these primary suspensions 2 operates between a chassis frame 4 of the truck 3 and a bridge element 5 connecting the primary suspensions 2 to a so-called "axle" 6 for interconnection of respective wheels 6a. Still in known manner, the primary suspensions 2 operate in combination with secondary suspensions 7 interposed between the truck frame 4 and a so-called "box" 8 that, together with two or more of said trucks 3 located at the respective ends thereof, constitutes a railway car.

The foregoing being stated, the spring member 1 essentially comprises an encircling collar 9 of annular extension, an attachment core 10 disposed coaxially within the encircling collar 9, and an elastic ring 11, made of elastomeric material and fixed by means of a rubber-metal bonding process carried out on vulcanization, between a first and a second cone-shaped surfaces 9a, 10a which are substantially parallel and formed internally of the collar 9 and externally of the core 10, respectively.

The encircling collar 9 lends itself to be engaged to one structure, in this particular case the chassis frame 4 of truck 3, through insertion of the collar in a housing 12 the shape of which matches the shape of said collar; said housing 12 is provided on a connecting bracket 13 designed to be fixedly engaged to the frame, for example by means of threaded members (not shown) coming into engagement through corresponding holes 14a formed in a perimetrical flange 14 of the bracket.

The core 10, in turn, is connected to the wheel axle 6 and more particularly to the bridge-shaped connecting element 5, for example through a threaded member (not shown) engaging in a threaded hole 10b provided in the core.

In a rest state, that is when the spring member 1 is disengaged from the railway truck, the elastic ring 11 is submitted to precompressive radial forces, preferably homogeneously distributed throughout the whole section thereof, generated as a result of a straining operation carried out in known manner on the outer collar in the absence of said connecting bracket. During this straining operation, the elastic ring 11 is urged to axially pass through an opening of reduced sizes with respect to the sizes originally exhibited by the perimetric outer extension of the encircling collar 9, partly represented in Fig. 2 by a dotted line "K".

Still in known manner, under operating conditions the vertical loads transmitted to the spring member 1 by effect of the load of the members lying on the connecting bracket 13 cause a relative shifting in a coaxial direction between the encircling collar 9 and core 10. Under this situation, the elastic ring 11 is compressed between the first and second cone-shaped surfaces 9a, 10a, and is subjected to elastic deformation thereby reacting to said loads.

The elastic ring 11 can also offer reactions to elastic compression in order to counteract radial thrust forces that manifest themselves during a braking of the railway car and/or on a bend. In greater detail, these radial forces can basically occur in one direction X-X at right angles to the geometric axis Z-Z of the spring member 1 and perpendicular to the ride direction, by effect of centrifugal forces on a bend for example, as well as in a second direction Y-Y, perpendicular to the first direction X-X and parallel to the ride direction, by effect of inertia forces generate during a braking action for example.

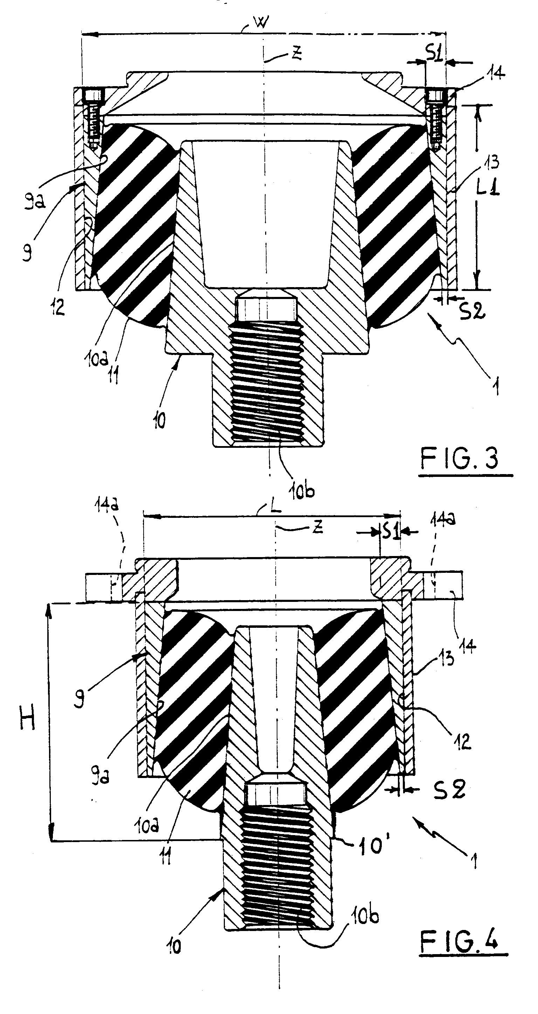

In accordance with the present invention, the encircling collar 9 is advantageously provided to have, along the first direction X-X, a dimensional extension denoted by "W" in Fig. 3, higher than the dimensional extension "L" detectable along the second direction Y-Y. In greater detail, the ratio value of size "W" to size "L" should be preferably included between 1.5 and 3.

Preferably, the core 10 too in the first direction X-X has a greater extension than in the second direction Y-Y. In greater detail, in the embodiment shown the perimetric extension of core 10 is defined by two semicircular arcs 15a, symmetrically spaced apart from each other along the X-X direction and joined together by two mutually parallel rectilinear stretches or portions 15b.

In this way the spring member 1 as a whole is given an elongated configuration in the first direction X-X so that it offers a stiffness coefficient towards the radial forces oriented in said X-X direction lower than the stiffness coefficient offered by the spring member towards the radial forces oriented parallelly to the second direction Y-Y.

This is substantially due to the fact that, with reference to stresses oriented in the first direction X-X, the amount or volume of elastomeric material concerned with buckling is greatly lower than the amount that can be found with reference to stresses oriented along the second direction Y-Y. Therefore, the core shifting relative to the encircling collar 9 will be higher when a given force is oriented in the first direction X-X than when the same force of same intensity is oriented in the second direction Y-Y.

In the described embodiment it is desirable that the ratio between the stiffness coefficients detectable along the second direction Y-Y and the first direction X-X respectively is included between 1.2 and 2.

It should be noted however that the elongated conformation given to the spring member 1 as previously described gives rise to an unexpected technical problem when it is necessary to resort to straining operations in order to achieve the elastomeric material precompression.

In fact it has been found that during the straining step said elongated configuration gave rise to longitudinal end swellings of the elastomeric material and it has been ascertained that said deformations result from a side deflection of the encircling metal collar 9. However these side deflection stresses had not been taken into account until now in the known art in that the cylindrical configuration of the encircling collar, due to its inherent nature, caused the mutual reduction to zero of these stresses at the geometric axis of the spring member 1.

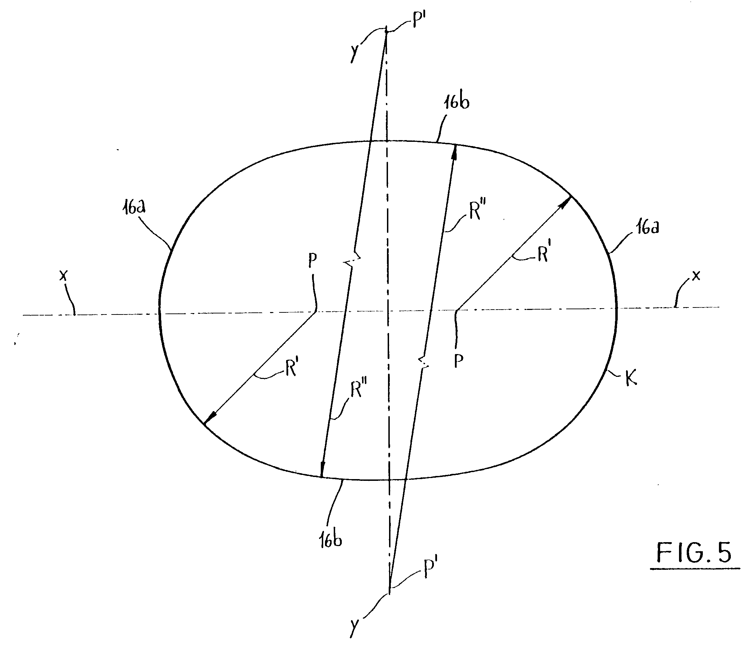

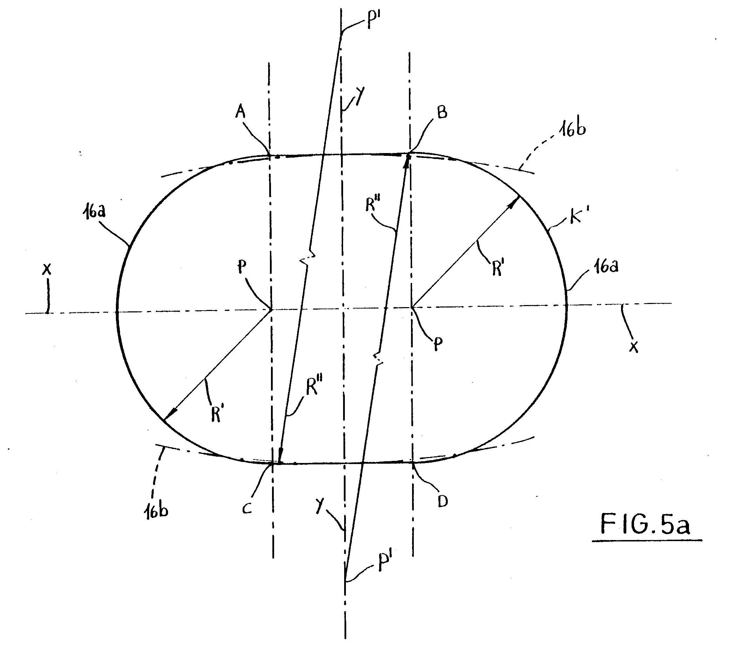

This problem may be better clarified with reference to Fig. 5a wherein line denoted by K' represents an example of the perimetric outline that could be given to the encircling collar 9 so that the spring member 1 may achieve said elongated configuration and, as a result, the difference in the stiffness coefficients detectable in directions X-X and Y-Y.

As shown in Fig. 5a, curve K' is defined by a first pair of arcs of circles 16a of radius R' symmetrically spaced apart relative to the second direction Y-Y and having the respective centres P in alignment along the first direction X-X, as well as by a pair of rectilinear segments AB, CD, disposed symmetrically relative to the first direction X-X, intersecting the second direction Y-Y at points Y' and being connected to the arcs of circles 16a.

Such a perimetric extension could be used when the elastomeric material precompression is obtained without resorting to the previously specified straining process.

On the contrary it has been found that if the straining operation is carried out, stretches AS and CD will tend to deflect thereby causing the unacceptable deformation of the encircling collar 9. It has also been found that this phenomenon would not occur if points A and C should be coincident with points B and D respectively, as it happens in known spring members provided with cylindrical collars. In the last mentioned case the plan shape of the collar should be a full circonference, which case is already known per se.

Practically, it has been ascertained that the elongated portions AB, CD of the encircling collar 9, as a result of the straining operation behaved more or less like stiff structures loaded to compression at the ends and therefore subjected to deflective deformations as it may happen in other fields when a rod is head-loaded

In an original manner, the applicant has advantageously also solved the above specified new technical problem.

In fact it has been found that in order to avoid deflective problems during the straining step, segments AB, CD need to be replaced by a second pair of arcs of circles 16b of radius R'', exhibiting the respective centres P' in alignment along the second direction Y-Y and intersecting said second direction at points Y' previously mentioned with reference to the intersection of segments AB, CD. In a preferential solution, the ratio between radius R'' of the second arcs 16b and radius R' of the first arcs 16a is included between 5 and 8. The second arcs 16b are then connected continuously with the first arcs 16a so as to substantially define curve K in Fig. 5.

In conclusion, the encircling collar 9 is provided to have, at least before the straining operation, a perimetric extension defined by one pair of curvilinear portions 16a with convexity turned outwardly of the collar 9 and symmetrically spaced apart with respect to the second direction Y-Y, being connected continuously to a second pair of curvilinear portions 16b symmetric with respect to the first direction X-X and also with convexity turned outwardly of collar 9 according to a wider bending radius than the bending radius of portions 16a forming the first pair.

These features may also be achieved by utilizing an encircling collar 9 of elliptic perimetric extension for example.

The final configuration given to the encircling collar 9 after the straining operation can be geometrically similar to the previously described primary configuration.

However, the accomplishment of the spring member 1 may also take place through a new process according to which, following the application of centripetal forces to the encircling collar 9 during the straining step, a reduction of bending of the second curvilinear portions 16b is caused. The final bending of the second curvilinear portions 16b at the end of straining could also take a zero value.

At all events the shape of the housing 12 formed in the connecting bracket 13 will preferably match the final shape of the encircling collar 9. Therefore this housing will have a curvilinear outline.

According to a plurality of examples or realization, the cited feature of replacing before the straining step the segments AB, CD by a second pair of arcs of circles 16b (fig. 5a), occurs when the lenght between the two center points P is at least three times the thickness "S2" (fig. 3), of the lower surface of the corresponding sides of the encircling collar. The collar is of steel, preferably carbon steel.

The description of the above examples is made now for simplicity making reference to the same figures of the, specification both for the step preceding the straining namely after the moulding of the rubber and the curing promoting the adhesion rubber metal, and further for the step after the straining.

In the step preceding the drafting, the spring shown in figures 3, 4 is to see without the connecting bracket 13 and the perimetrical flange 14.

Further, the outside sizes of the spring before the straining will be greater than those shown in figures 3 and 4.
In the above examples, before the straining operation, the geometrical parameters of the spring are the following:
- angle of the conical opposite surfaces both of the encircling collar and of the core of 5°.
- lenght between the two centers P between 20 and 70 mm, for example of 40 mm.
- thickness S1 of the upper part of the encircling collar between 7 mm and 18 mm, for example 11 mm.
- thickness S2 of the lower part of the encircling collar between 2 and 6 mm, for example 3 mm.
- Radius R'' of the second pairs of arcs 16b of the encircling collar on the upper part betwen 350 and 550 mm, for example 400 mm and internal radius of the encircling collar 389 mm.
- Radius R' of the first pairs of arcs 16a between 50 and 110 mm, for example 73 mm.
- Dimensions of the greater axis along the direction X-X.
   a. outer greater axis (W) between 320 and 180 mm, for example 203 mm.
   b. internal upper axis (W-2S1) between 185 and 137 mm, for example 181 mm.
   c. internal lower axis (W-2S2) between 189 and 191 mm, for example 197 mm.
- Dimensions of the smaller axis along the Y-Y, direction.
   d. smaller axis (L) between 120 and 170 mm, for example 149 mm of which 146 mm would correspond to a spring having straight sides parallely to the direction X-X.
   e. smaller internal upper axis (L-2S1) between 170 and 310 mm, for example 127 mm.
   f. smaller internal lower axis (L-2S2) between 176 and 316 mm, for example 143 mm.
- thickness of the elastomeric rubber between the encircling collar and the core 10 between 25 mm and 50 mm, for example 33 mm.

Preferentially, the lenght L1 of the encircling collar considered on the outermost lateral surface is of 92 mm and the height H of the spring between the upper surface of the encircling collar and the step 10' of the core is 142 mm.

Preferentially, the elastomeric material is natural rubber or neoprene and the hardness is comprised between 50 and 65 Shore A.

The straining step is done making recourse to an apparatus having a funnel casing (not shown being already known) comprising a first cylindrical part, where the spring is coaxially placed, followed by a second further part slightly shaped as a truncated cone having is sizes gradually smaller than those of the spring after moulding.

An appropriate piston (not shown), having a surface smaller than that of said cylindrical surface, pushes on the upper surface of the encircling collar; consequently it occurs both the straining of the spring and the precompression of the rubber.

During the straining step, a specified guide element associated to th piston is introduced into the threaded hole 10b of the core 10 having the only function to maintain centered the core 10; in fact the core 10 does not receive any mechanical thrust for the part opposite to the piston.

After the straining operation, the geometrical parameters of the spring according to the above specific example are the following:
- Lenght between the two centers P from 57 mm to 55,3 mm.
- Radius R'' of the second pairs of arc 16b from 400 mm to 397 mm and internal radius from 389 to 385.6 mm.
- Radius R' of the first pairs of arcs 16a from 73 mm to 70 mm and internal radius of the same upper surface from 62 mm to 58.9 mm. - Dimensions of the core 10 after drafting unaltered.
- thickness S1 of the upper part of the encircling collar from 11 mm to 11,4 mm.
- thickness S2 of the lower part of the encircling collar from 3 mm to 3,1 mm.
- Dimension of the greater axis along the direction X-X.
   a. outer greater axis (W) from 203mm to 197 mm.
   b. internal upper axis (W-2S1) from 181 mm to 174,2 mm.
   c. internal lower axis (W-2S2) from 197 to 190.8 mm.
- Dimensions of the smaller axis along the Y-Y direction.
   d. smaller axis (L) from 149 to 146 mm.
   e. smaller internal upper axis (L-2S1) from 127 to 120.2 mm.
   f. smaller internal lower axis (L-2S2) from 143 to 136.8 mm.
- thickness of the elastomeric rubber between the encircling collar and the core 10 from 33 to 30 mm.
- Lenght of the collar from 92 mm to 93.5 mm. Height H of the spring from 142 to 149 mm.

After the straining step, it is originated a light tickening and lenghtening of the encircling collar, in fact the material placed under straining stresses of the order of ten of tons, for example of two tons, is in a plastic condition and being subjected to contraction tends to find its way where possible, namely by means of expansion and lenghtening.

Furthermore after the straining step, the spring increases its height H owing to the reduction of thickness of the elastomeric material which, compelled to find its way where possible along the vertical direction, pushes the core away from its original position after moulding. Besides the previous indications given from the preferential example, it is pointed out furthermore that the main sizes of the spring of the other examples could be reduced with values comprised between 7% and 13%.

The present invention achieves important advantages.

In fact, the necessity of forming openings in the spring member as required in the known art for achieving the differentiation of the stiffness coefficients in the two radial directions is eliminated.

It should be also recognized that in the spring member of the invention there is the complete elimination of shearing stresses that in the known art were generated in the presence of said openings. Since, as known, the elastomeric material exhibits a low resistance to shearing stresses, due to its inherent nature, said stresses were very undesirable in that they caused an important reduction in the lifetime of the spring members as well as in the practical reliability of the same.

## Claims

1. A process for making a spring member suitable for vehicle suspensions, comprising the steps of:
- providing an encircling collar (9) Of annular extension designed to be connected to a first structure (4) and exhibiting a perimetric extension defined by one pair of curvilinear portions (16a) with convexity turned outwardly of the collar (9) and disposed symmetrically with respect to a second direction (Y-Y) and a second pair of curvilinear portions which are symmetric with respect to a first direction (X-X) with convexity turned outwardly of the collar (9) according to a wider bending radius than the portions (16a) forming the first pair and connected to the latter continously;
- providing a core (19) designed to be engaged to a second structure (5,6) oscillatably connected to the first structure (4);
- providing an elastic ring (11) made of elastomeric material;
said process being characterized by further comprising the steps of:
- achieving a rubber metal bond for fixing the elastic ring (11) between said encircling collar (9) and said core (10), this latter being coaxially disposed within the encircling collar (9);
- straining said spring member (1) by urging it to pass through an opening with reduced sizes with respect to the sizes exhibited by the encircling collar before the drafting step whereby centriptal compressive forces are exerted on the encircling collar (9), for generating precompressive radial forces within said elastic ring (11) due to a permanent centripetal deformation of the encircling collar (9), said straining step, being achieved in such a manner that a step of reducing the bendings of said curvilinear portions (16b) forming the second pair is achieved following said centripetal compressive forces.

2. The process according to claim 1, characterized in that at the end of the straining step, the bending of the portions (16b) belonging to said pair is substantially zero.

## Patentansprüche

1. Verfahren zur Herstellung eines für Fahrzeugaufhängungen geeignetes Federorgans, umfassend die Verfahrensschritte:
- Vorsehen eines Gürtelkragens (9) ringförmiger Abwicklung, der dazu bestimmt ist, mit einem ersten Aufbau (4) verbunden zu werden, und eine Umfangsabwicklung aufweist, die durch ein erstes Paar von krummlinigen Abschnitten (16a) mit außerhalb des Gürtelkragens (9) gerichteter Konvexität, die symmetrisch zu einer zweiten Richtung (Y-Y) angeordnet sind, und durch ein zweites Paar von krummlinigen zu einer ersten Richtung (X-X) symmetrischen Abschnitten mit nach außen des Gürtelkragens (9) gerichteter Konvexität gemäß einer gegenüber den Abschnitten (16a) größeren Krümmung festgelegt ist, die das erste Paar von Abschnitten bilden und in diese letzteren kontinuierlich übergehen;
- Vorsehen eines Kerns (10), der dazu bestimmt ist, an einem zweiten, verschwenkbar mit dem ersten Aufbau verbundenen Aufbau (5, 6) anzugreifen;
- Vorsehen eines aus Elastomer ausgeführten Federringes (11);
wobei das Verfahren dadurch gekennzeichnet ist, daß es weiters folgende Verfahrensschritte umfaßt:
- Verwirklichung eines Gummi-Metall-Verbandes, um den Federring (11) zwischen dem Gürtelkragen (9) und dem Kern (10) zu befestigen, wobei dieser letztere zum Inneren des Gürtelkragens (9) koaxial angeordnet ist;
- Ziehen des Federorgans (1), indem es gezwungen wird, eine Öffnung mit herabgesetzten Abmessungen gegenüber jenen zu durchqueren, die der Gürtelkragen vor des Arbeitsschrittes des Ziehens ausweist, wobei auf den Gürtelkragen (9) zentripetale Preßkräfte ausgeübt werden, um innerhalb des Federringes (11) radiale Vorspannkräfte zufolge der zentripetalen Dauerverformung des Gürtelkragens (9) zu erzeugen,
wobei der Verfahrensschritt des Ziehens derart durchgeführt wird, daß ein Schritt der Verkleinerung der Krümmungen der das zweite Paar bildenden, krummlinigen Abschnitte (16b) zufolge der zentripetalen Preßkräfte durchgeführt wird.

2. Verfahren nach Anspruch 1, dadurch gekennzeichnet, daß am Ende des Verfahrensschrittes des Ziehens, die Krümmung der diesem Paar angehörenden Abschnitten (16b) im wesentlichen Null ist.

## Revendications

1. Procédé pour réaliser un élément à ressort pour la fabrication de suspensions de véhicule, comprenant les étapes de:
- prévoir un collier d'enceinte (9) à extension annulaire, destiné à être relié à une première structure (4) et présentant une extension périmétrale définie par une première paire de portions curvilignes (16a) dont la convexité est tournée vers l'extérieur du collier (9), lesquelles sont disposées symétriquement par rapport à une deuxième direction (Y-Y), et une seconde paire de portions curvilignes qui sont symétriques par rapport à une première direction (X-X) dont la convexité est tournée vers l'extérieur du collier (9) suivant un rayon de courbure plus large que les portions (16a) formant la première paire et qui sont reliées à ces dernières de manière continue;
- prévoir un noyau central (19) destiné à être engagé à une deuxième structure (5, 6) reliée de manière oscillante à la première structure (4);
- prévoir un anneau ressort (11) de matériau élastomère;
ledit procédé étant caractérisé en ce qu'il comporte en outre les étapes de:
- réaliser une adhésion métal-caoutchouc pour fixer l'anneau ressort (11) entre ledit collier d'enceinte (9) et ledit noyau (10), ce dernier étant disposé coaxialement dans le collier d'enceinte (9);
- étirer ledit élément à ressort (1) en le poussant à passer à travers une ouverture de dimensions réduites par rapport aux dimensions présentées par le collier d'enceinte avant l'étape d'étirage, de sorte que des forces centripètes de compression sont exercées sur le collier d'enceinte (9), en vue d'engendrer des forces radiales de pré-compression dans ledit anneau ressort (11), à la suite d'une déformation permanente centripète du collier d'enceinte (9),
ladite étape d'étirage étant réalisée de telle sorte qu'on obtient une étape de réduction des courbures desdites portions curvilignes (16b) formant la seconde paire à la suite desdites forces centripètes de compression.

2. Procédé selon la revendication 1, caractérisé en ce qu'à la fin de l'étape d'étirage, la courbure des portions (16b) appartenant à ladite paire est essentiellement nulle.
